Europäisches Patentamt

European Patent Office

Office européen des brevets

(19)

(11) **EP 1 194 754 B1**

(12) ## EUROPEAN PATENT SPECIFICATION

(45) Date of publication and mention
of the grant of the patent:
**31.08.2005 Bulletin 2005/35**

(21) Application number: **00944562.8**

(22) Date of filing: **12.06.2000**

(51) Int Cl.⁷: **G01G 11/02**

(86) International application number:
**PCT/SI2000/000016**

(87) International publication number:
**WO 2001/004588 (18.01.2001 Gazette 2001/03)**

(54) **CONVEYOR SCALE FOR CONTROLLING ROCK WOOL SURFACE DENSITY**

BANDWAAGE ZUR STEUERUNG DER MINERALWOLLEOBERFLÄCHENDICHTE

BASCULE DE CONVOYEUR PERMETTANT DE CONTROLER LA DENSITE SURFACE DE LA
LAINE DE ROCHE

(84) Designated Contracting States:
**AT DE FR**

(30) Priority: **14.07.1999 SI 9900178**

(43) Date of publication of application:
**10.04.2002 Bulletin 2002/15**

(73) Proprietor: **Termo d.d. Industrija Termicnih
Izolacij, Skofjaloka
4220 Skofja Loka (SI)**

(72) Inventors:
• **SIROK, Brane
1360 Vrhnika (SI)**

• **MIHOVEC, Bojan;
4220 Skofja Loka (SI)**
• **BRADESKO, Franc;
4220 Skofja Loka (SI)**
• **MOZINA, Peter;
4223 Poljane (SI)**

(74) Representative: **Grünecker, Kinkeldey,
Stockmair & Schwanhäusser Anwaltssozietät
Maximilianstrasse 58
80538 München (DE)**

(56) References cited:
**BE-A- 657 008        DE-C- 654 092
US-A- 2 029 271**

## Description

The object of the present invention are rock wool process conveyor scales for controlling and adjusting the specific surface density of the rock wool in rock wool production.

In rock wool production, the surface weight or the specific surface density of the final product is one of the paramount parameters involved in the process, allowing the product to achieve the highest quality level. The said parameter directly depends on the time variation of the rock wool mass flux on the production line.

The mass flux variation depends on various multivariable parameters which are generally random in character. By certain interventions at the spot where the melt is being generated and scattered into fibers (dome furnace/centrifuge), the intensity of the time variation of the rock wool mass flux may be diminished, although it can never be completely eliminated. For this reason, nowadays in practical applications a regulation method is generally employed, which, by varying the velocity of the conveyor belts and of the roller/conveyor systems along the production line, guarantees a constant surface density to the final product. By increasing or decreasing the velocity of the line, the instantaneous deviation of the rock wool mass flux from the nominal mass flux, a defined technological datum for a given product, can be regulated.

Nowadays, the problem described above is generally solved by means of double regulation, comprising the primary and secondary conveyor scales and the corresponding regulation signals. The quality of both signals has a direct influence on the quality of the regulation. Usually, the primary scales signal measures the base dynamics of the process and is periodically adjusted by means of the secondary scales signal, the average value of the latter being more reliable over longer periods of time.

With the prior art technical solutions, the primary conveyor scales commonly measure the mass flux by measuring the reaction force of the conveyor belt acting on the force measuring sensors, which is usually done through the use of a pair of sensors. These sensors, however, do not directly measure the gravitational force of the rock wool layer moving along the conveyor belt, they only measure the multiparametric proportional functional interdependence of the instantaneous rock wool mass flux and the instantaneous reaction force applied to the embedded sensors. The paramount interfering quantities influencing the measured signal of the rock wool layer gravitational force are the varying tension force in the belt, due to the temperature dilatation, and the varying force related to the mechanical properties of the belt itself. These phenomena have a negative effect upon the reliability of the measuring results in prior art scales.

In the patent No. DE 654 092 conveyor belt scale is disclosed, where the problem of synchronization of belt drive and registration drive is solved. Registration drive with the equilibration levers and weights are mounted to the belt construction, both moving jointly.

The object of the invention is to devise and construct rock wool process conveyor scales which will be not only more reliable and more precise than prior art scales, but first of all more independent of the said interference factors which have a negative effect upon the accuracy of the measurements.

According to the invention, this object is achieved by the independent patent claims.

The present patent application discloses the modified concept of measuring the rock wool mass flux on the primary scales. The rock wool mass flux is defined by the measured velocity of the conveyor belt i. e. of the rock wool layer (measured in m/s) and by the net gravitational force of the length unit of the rock wool layer which, at a given moment in time, is present on the scales m, (in kg/m).

$$m = v \times m_a \text{ (kg/s)}$$

The net weight of the rock wool layer is measured after having counterbalanced the entire conveyor belt construction via four crank mechanisms with weights, selected on the basis of the balance of the forces in their points of application.

The invention shall be described with reference to an embodiment thereof, illustrated by a drawing.

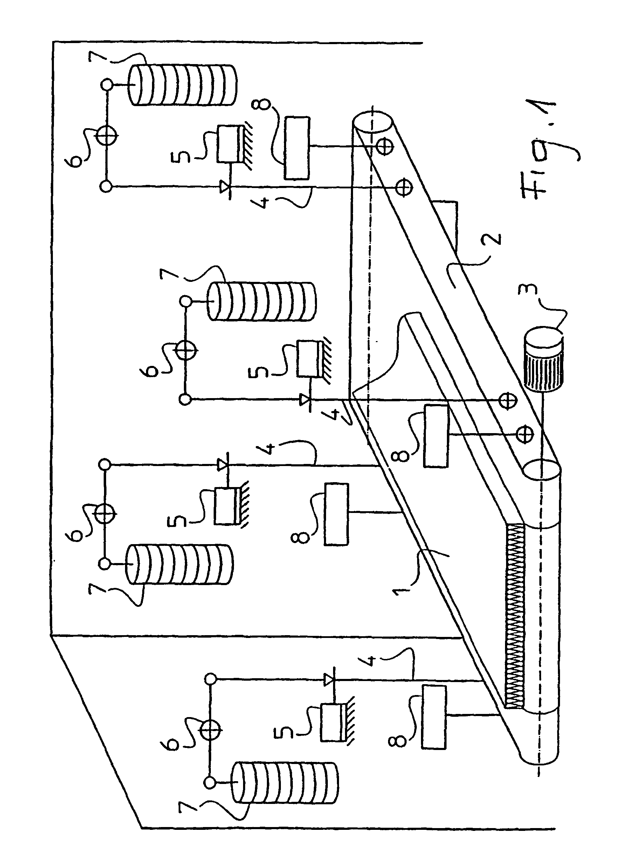

Fig. 1 a schematic view of the rock wool scales

The rock wool layer 1 travels jointly with the conveyor belt 2. The velocity of the conveyor belt 2 and the velocity of the rock wool layer 1 are equal. The velocity of the conveyor belt 2 is measured in terms of frequency of the continuous frequency regulator of the driving motor 3. The entire conveyor belt 2 construction, together with the driving motor 3, is suspended from mobile bars 4. Part of the gravitational force of the conveyor belt 2 and of the driving electric motor 3 is intercepted by the dynamometers 5, while the remaining part is counterbalanced with the weights 7 via the levers 6. The ratio of the masses of the freely suspended conveyor belt 2 and the motor 3 to the weights 7 is selected in such a manner that the measuring range of the dynamometers 5 is used over the whole measuring range, which is of the same order of magnitude as the gravitational force of the rock wool layer 1. Thus the stress is relieved off the dynamometers 5, which principally intercept the net weight of the rock wool layer 1 on the conveyor belt 2. The tare of the primary scales is intercepted by the weights 7 via the levers 6. The weights 7 are selected in such a way that in the stress-relieved state, when there is no rock wool layer 1 on the conveyor belt 2, the corresponding dynamometers 5 are loaded with the force »F tare«, amounting to ca. 10% of the nominal force of the dynamometer 5 »F nominal«. Thus, during operation, a stabile state of the conveyor belt 2 is achieved. To prevent dynamic excitation of the entire primary scales construction in operation, contactless pneumatic dampers 8 are provided which reduce mechanical vibrations of the entire system both inside and outside its resonance range.

Of course, within the scope of the invention, by making use of convenient supplemental levers and/or a convenient construction, rock wool process scales, using fewer than four bars 4, dynamometers 5, levers 6, and/or weights 7, may be constructed.

The above-described scales for measuring the gravitational force in four resting points permit direct measuring of the gravitational force of the rock wool layer on the moving belt, whilst compensating the mass of the conveyor belt itself.

The signal of the dynamometers 5 is composed mainly of the instantaneous gravitational force of the rock wool layer 1, present on the moving conveyor belt 2, and only in a small degree of the mass of the conveying system as such, which constitutes the preload of the inventive scales. By measuring the gravitational force in four resting points according to the invention, direct measuring of the gravitational force of the rock wool layer on the moving conveyor belt, through compensating the mass of the conveyor belt itself, is achieved. This results in an increased sensitivity of the sensors and in a reduced measuring error in the measurement of the instantaneous gravitational force of the rock wool layer.

## Claims

1. Rock wool process conveyor scales for controlling and adjusting the specific surface density of the rock wool in the rock wool production, based upon the measuring of the rock wool mass flux, **characterized in that,** an entire conveyor belt construction (2) together with a driving motor (3) is suspended by mobile bars (4) at four resting points, wherein a part of the gravitational force of the conveyor belt construction (2) and the driving motor (3) is intercepted by dynamometers (5) assigned to each mobile bar (4) and the remaining part is counterbalanced by weights (7) via levers (6) connected to the mobile bars (4).

2. Rock wool process conveyor scales according to claim 1, **characterized in that** the ratio of the masses of the freely suspended conveyor belt construction (2) of the motor (3) to the weights (7) is selected in such a manner that the dynamometers (5) intercept principally the net weight of the rock wool layer (1) present on the conveyor belt construction (2).

3. Rock wool process conveyor scales according to claim 1 or 2, **characterized in that** the scale comprises four mobile bars (4), four dynamometers (5), four levers (6), and/or four weights (7).

4. Rock wool process conveyor scales according to one of the previous claims, **characterized in that** pneumatic dampers (8) are assigned to the conveyor belt construction (2) to prevent dynamic excitation of the scale.

## Patentansprüche

1. Mineralwollverarbeitungs-Förderwaage zum Überwachen und Regulieren der Flächendichte der Mineralwolle bei der Mineralwollherstellung auf Basis der Messung des Mineralwolle-Massenstroms, **dadurch gekennzeichnet, dass** eine gesamte Förderbandkonstruktion (2) zusammen mit einem Antriebsmotor (3) an beweglichen Profilstangen (4) an vier Auflagepunkten aufgehängt ist, wobei ein Teil der Schwerkraft der Förderbandkonstruktion (2) und des Antriebsmotors (3) durch Dynamometer (5) aufgenommen wird, die jeder beweglichen Profilstange (4) zugeordnet sind, und der verbleibende Teil durch Gewichte (7) über Hebel (6) ausgeglichen wird, die mit den beweglichen Profilstangen (4) verbunden sind.

2. Mineralwollverarbeitungs-Förderwaage nach Anspruch 1, **dadurch gekennzeichnet, dass** das Verhältnis der Massen der frei aufgehängten Förderbandkonstruktion (2) und des Motors (3) zu den Gewichten (7) so ausgewählt wird, dass die Dynamometer im Wesentlichen das Nettogewicht der Mineralwollschicht (1) aufnehmen, die auf der Förderbandkonstruktion (2) vorhanden ist.

3. Mineralwollverarbeitungs-Förderwaage nach Anspruch 1 oder 2, **dadurch gekennzeichnet, dass** die Waage vier bewegliche Profilstangen (4), vier Dynamometer (5), vier Hebel (6) und/oder vier Gewichte (7) umfasst.

4. Mineralwollverarbeitungs-Förderwaage nach einem der vorangehenden Ansprüche, **dadurch gekennzeichnet, dass** pneumatische Dämpfer (8) der Förderbandkonstruktion (2) zugeordnet sind, um dynamische Anregung der Waage zu verhindern.

## Revendications

1. Bascule de convoyeur de traitement de laine de roche pour contrôler et ajuster la densité surfacique de la laine de roche dans la production de laine de roche sur la base de la mesure du flux de masse de la laine de roche,

**caractérisée en ce que**,

une construction de courroie de convoyeur (2) entière ainsi qu'un moteur d'entraînement (3) sont suspendus par des barres mobiles (4) au niveau de quatre points d'appui, dans laquelle une partie de la force gravitationnelle de la construction de courroie de convoyeur (2) et du moteur d'entraînement (3) est interceptée par des dynamomètres (5) attribués à chaque barre mobile (4) et la partie restante est contrebalancée par des poids (7) par l'intermédiaire de leviers (6) reliés aux barres mobiles (4).

2. Bascule de convoyeur de traitement de laine de roche selon la revendication 1, **caractérisée en ce que** le rapport des masses de la construction de courroie de convoyeur (2) suspendue librement du moteur (3) sur les poids (7) est sélectionné de manière à ce que les dynamomètres (5) interceptent principalement le poids net de la couche de laine de roche (1) présente sur la construction de courroie de convoyeur (2).

3. Balance de convoyeur de traitement de laine de roche selon la revendication 1 ou 2, **caractérisée en ce que** la balance comprend quatre barres mobiles (4), quatre dynamomètres (5), quatre leviers (6) et/ ou quatre poids (7).

4. Balance de convoyeur de traitement de laine de roche selon l'une des revendications précédentes, **caractérisée en ce que** des amortisseurs pneumatiques (8) sont attribués à la construction de courroie de convoyeur (2) afin d'éviter une excitation dynamique de la balance.

Fig. 1